# EUROPEAN PATENT APPLICATION

(11) **EP 4 228 059 A1**
(43) Date of publication of application: **16.08.2023**
(21) Application number: 22871461.4
(22) Date of filing: 07.06.2022
(51) Int. Cl.: H01M 10/615, H01M 10/625, H01M 10/6571

(54) **ELECTRICAL APPARATUS, BATTERY, HEATING FILM AND MANUFACTURING METHOD THEREFOR AND MANUFACTURING DEVICE THEREFOR**

(30) Priority: 27.09.2021 CN 202111133898
(71) Applicant: Contemporary Amperex Technology Co., Limited, Ningde City, Fujian 352100 (CN)
(72) Inventor: LIU, Mengdong, Ningde City, Fujian 352100 (CN); HE, Fu, Ningde City, Fujian 352100 (CN)
(74) Representative: Herrmann, Uwe
(86) International application number: PCT/CN2022/097296
(87) International publication number: WO 2023/045400

(57) **Abstract**

Embodiments of the present application provide an electrical apparatus, a battery, a heating film and a manufacturing method and a manufacturing device thereof. The heating film includes a first protective layer, a second protective layer, and a heating layer and an electrode layer arranged in a stacked manner between the first protective layer and the second protective layer. The heating layer includes a plurality of sub heating regions arranged at intervals, and the electrode layer is electrically connected to the plurality of sub heating regions to form a parallel heating loop. For the heating film according to the embodiments of the present application, by arranging the heating layer including the plurality of sub heating regions, each sub heating region forms an independent circuit loop, so that when a single sub heating region is aged due to being punctured, damaged, or the like, it will only affect heating at a heating film location corresponding to the sub heating region, and will not affect normal heating of other sub heating regions. Such arrangement is conducive to improving the service life of the heating film and reducing the possibility of heating failure of the heating film.

## Description

### Cross-Reference to Related Applications

The present application claims priority of Chinese Patent Application No. 202111133898.6 filed on September 17, 2021 and entitled "HEATING FILM, BATTERY, ELECTRICAL APPARATUS, AND MANUFACTURING METHOD AND MANUFACTURING DEVICE," which is incorporated herein by reference in its entirety.

### Technical Field

The present application relates to the field of battery technologies, and in particular, to an electrical apparatus, a battery, a heating film and a manufacturing method and a manufacturing device thereof.

### Background Art

With the improvement of battery technologies, electrical apparatuses, such as vehicles, are getting closer to people's lives. At the same time, vehicles have increasingly high requirements on the performance of batteries that provide energy.

In order to enable a battery to be used normally in a low temperature environment such as winter, an additional heating film is attached to the battery so that the battery is capable of being heated up rapidly. During the normal use of the battery, sometimes there may be a problem that the heating film fails to provide heat energy normally due to a failure, which affects the normal use of the battery in the low temperature environment.

### Summary of the Invention

The present application provides an electrical apparatus, a battery, a heating film and a manufacturing method and a manufacturing device thereof, which is capable of reducing the risk of failure during a working process of the heating film.

In one aspect, embodiments of the present application provide a heating film, the heating film includes a first protective layer, a second protective layer, and a heating layer and an electrode layer arranged in a stacked manner between the first protective layer and the second protective layer, the heating layer includes a plurality of sub heating regions arranged at intervals, and the electrode layer is electrically connected to the plurality of sub heating regions to form a parallel heating loop.

For the heating film provided by the embodiments of the present application, by arranging the heating layer including the plurality of sub heating regions arranged at intervals, each sub heating region forms an independent circuit loop, so that when a single sub heating region is aged due to being punctured or damaged, it will only affect heating at a corresponding location of the sub heating region, and will not affect normal heating of other sub heating regions, thereby ensuring normal working of corresponding locations of other sub heating regions of the heating film. In this way, it is beneficial to improve the service life of the heating film and reduce the possibility of a heating failure of the heating film.

According to an embodiment of the present application, at least one of the first protective layer and the second protective layer includes an insulating sub-layer and a bonding sub-layer, and the bonding sub-layer is arranged on one side of the insulating sub-layer away from the heating layer. In this way, the heating film may be stuck to a corresponding location of the battery by bonding, and the operation is more convenient and quicker.

Polyimide and polyethylene are capable of enabling the heating film to have a high heat resistance temperature and a high melting temperature, and improving the structural stability of the heating film under working conditions. Moreover, polyimide and polyethylene are capable of enabling an instant heating film to have a high tensile strength.

According to an embodiment of the present application, the material of the sub heating region includes graphene; and/or, the material of the first protective layer includes at least one of polyimide and polyethylene; and/or, the material of the second protective layer includes at least one of polyimide and polyethylene. The heating film made of a graphene material has good thermal conductivity and safety performance.

According to an embodiment of the present application, a gap between two adjacent sub heating regions of the same layer is 3 mm to 8 mm. Such arrangement can ensure the thermal efficiency of a certain area of the heating film, facilitate the processing of the heating film, and improve the safety performance of the heating film during use.

According to an embodiment of the present application, one heating layer is provided with two electrode layers, and the two electrode layers are respectively arranged on surfaces on both sides of the heating layer. Arranging one heating layer for two electrode layers can effectively reduce the risk of heating failure of the heating film due to the damage of the electrode layer.

According to an embodiment of the present application, the sub heating regions are distributed in one or a plurality of rows, and each row has a plurality of sub heating regions distributed at intervals. On the premise that the area of the heating film is fixed, arranging the sub heating regions in one or a plurality of rows is convenient for reasonable layout of the sub heating regions of the heating layer, thereby being conducive to circuit layout in the electrode layer.

According to an embodiment of the present application, the electrode layer includes a plurality of electrodes, and two opposite sides of the sub heating region perpendicular to a surface in a stacking direction are respectively electrically connected to electrodes. It is still capable of achieving the purpose of generating heat in the sub heating region.

According to an embodiment of the present application, one electrode is electrically connected to a plurality of sub heating regions in the same row in a row direction of the plurality of sub heating regions; and/or, one electrode is electrically connected to the sub heating regions of two adjacent rows. Such an arrangement is convenient for arranging the sub heating regions of the heating layer, thereby facilitating the circuit layout in the electrode layer. By arranging the sub heating region to be distributed in a plurality of rows, on the premise that the area of the heating film is fixed, the quantity of heating locations of the heating film may be further increased, and a heating area of a single sub heating region may be reduced, so that consequences of heating failure caused by the damage of a sub heating region have less impact on the heating effect of the entire heating film.

In another aspect, a battery is provided according to the present application, including: the heating film provided by any of the above embodiments; and battery cells, the plurality of battery cells being arranged to be stacked in a thickness direction, and the heating film being used for heating the battery cells.

For the battery provided according to the embodiment of the present application, the heating film is attached to an outer surface of the battery cell; and/or, a dimension of the sub heating region in the thickness direction is W, a dimension of the battery cell in the thickness direction is L, and L≤W≤2L. In this way, the heating layer may be arranged with a reasonable quantity of sub heating regions, which can not only reduce the risk of low heat transfer efficiency of the heating film, but also reduce the manufacturing difficulty of the heating layer.

In still another aspect, the embodiments of the present application provide an electrical apparatus, including the battery provided by any of the above embodiments, and the battery is used for providing electric energy.

In yet another aspect, the embodiments of the present application provide a manufacturing method of a heating film, including: providing a first protective layer, a second protective layer, a heating layer, and an electrode layer, wherein the heating layer includes a plurality of sub heating regions arranged at intervals; and stacking the heating layer and the electrode layer between the first protective layer and the second protective layer, and electrically connecting the electrode layer to the plurality of sub heating regions to form a parallel heating loop.

For the manufacturing method of a heating film provided by the embodiments of the present application, by arranging the heating layer including the plurality of sub heating regions arranged at intervals, each sub heating region forms an independent circuit loop, so that when a single sub heating region is aged due to being punctured or damaged, it will only affect heating at a corresponding location of the sub heating region, and will not affect heating of other sub heating regions, thereby ensuring normal working of corresponding locations of other sub heating regions of the heating film. In this way, it is beneficial to improve the service life of the heating film and reduce the risk of heating failure of the heating film.

In yet another aspect, the embodiments of the present application provide a manufacturing device of a heating film, including: a provision module configured to provide a first protective layer, a second protective layer, a heating layer, and an electrode layer, wherein the heating layer includes a plurality of sub heating regions arranged at intervals; and an assembling module configured to stack the heating layer and the electrode layer between the first protective layer and the second protective layer, and electrically connect the electrode layer to the plurality of sub heating regions to form a parallel heating loop.

For the manufacturing device of a heating film provided by the embodiments of the present application, it is capable of arranging the heating layer including the plurality of sub heating regions arranged at intervals, each sub heating region forms an independent circuit loop, so that when a single sub heating region is aged due to being punctured or damaged, it will only affect heating at a corresponding location of the sub heating region, and will not affect heating of other sub heating regions, thereby ensuring normal working of corresponding locations of other sub heating regions of the heating film. In this way, it is beneficial to improve the service life of the heating film and reduce the possibility of heating failure of the heating film.

For the electrical apparatus, the battery, the heating film and the manufacturing method and manufacturing device thereof provided by the embodiments of the present application, by arranging the heating layer of the heating film including the plurality of sub heating regions arranged at intervals, each sub heating region forms an independent circuit loop, so that when a single sub heating region is aged due to being punctured or damaged, it will only affect heating at a corresponding location of the sub heating region, and will not affect heating of other sub heating regions, thereby ensuring normal working of corresponding locations of other sub heating regions of the heating film. In this way, it is beneficial to improve the service life of the heating film and reduce the possibility of heating failure of the heating film.

### Description of Drawings

In order to illustrate the technical solutions of the embodiments of the present application more clearly, the drawings required in the embodiments of the present application will be briefly introduced below. Obviously, the drawings described below are only some embodiments of the present application. For those of ordinary skill in the art, other drawings can also be obtained according to the drawings without any creative effort.
Fig. 1 is a schematic structural diagram of a vehicle according to an embodiment of the present application;
Fig. 2 is a schematic diagram of a disassembled structure of a battery according to an embodiment of the present application;
Fig. 3 is a schematic partial structural diagram of a battery module according to an embodiment of the present application;
Fig. 4 is a schematic structural diagram of a heating film according to an embodiment of the present application;
Fig. 5 is a sectional diagram along N-N in an embodiment of Fig. 4;
Fig. 6 is a sectional diagram along N-N in another embodiment of Fig. 4;
Fig. 7 is a schematic structural diagram of an arrangement of sub heating regions in a heating film according to an embodiment of the present application;
Fig. 8 is a schematic structural diagram of an arrangement of sub heating regions in a heating film according to another embodiment of the present application;
Fig. 9 is a schematic diagram of a disassembled structure of a heating film according to an embodiment of the present application;
Fig. 10 is a schematic structural diagram of a disassembled structure of a heating film according to another embodiment of the present application;
Fig. 11 is a schematic structural diagram of a disassembled structure of a heating film according to still another embodiment of the present application;
Fig. 12 is a schematic partial structural diagram of a battery according to an embodiment of the present application;
Fig. 13 is a flowchart of a manufacturing method of a heating film according to an embodiment of the present application; and
Fig. 14 is a schematic structural diagram of a manufacturing device of a heating film according to an embodiment of the present application.

In the drawings, the drawings are not drawn to actual scale.

### Description of reference numerals:

1. Vehicles; 1a. Motor; 1b. Controller;
10. Battery; 11. Bottom case; 12. Top case;
20. Battery module;
30. Battery cell;
40. Heating film; 41. Heating layer; 411. Sub heating region; 42. Electrode layer; 421. Electrode; 43. First protective layer; 431. Insulating sub-layer; 432. Bonding sub-layer; 44. Second protective layer;
100. Manufacturing device; 110. Provision module; 120. Assembling module;
X. Thickness direction; Y. Stacking direction.

### Detailed Description

The implementations of the present application are further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first" and "second" are used for descriptive purposes only, and cannot be construed as indicating or implying relative importance. "Perpendicular" is not strictly perpendicular, but within an allowable range of error. "Parallel" is not strictly parallel, but within an allowable range of error.

Orientation words appearing in the following description are directions shown in the figures, and do not limit the specific structure of the present application. In the description of the present application, it should be noted that the terms "mounting," "connecting," and "connection" should be understood in a broad sense, unless otherwise explicitly specified or defined. For example, it may be a fixed connection, a detachable connection, or an integrated connection; and it may be a direct connection or an indirect connection through an intermediate medium. For those of ordinary skill in the art, the specific meanings of the above terms in the present application may be understood according to specific circumstances.

In the present application, the battery cell may include a lithium-ion secondary battery, a lithium-sulfur battery, a sodium-lithium-ion battery, a sodium-ion battery, a magnesium-ion battery, or the like, without limitation in the embodiments of the present application. The battery cell may be cylindrical, flat, rectangular, or in other shapes, which is also not limited in the embodiments of the present application. The battery cells are generally divided into three types according to encapsulating manners: cylindrical battery cells, rectangular square battery cells, and pouch cells, which are not limited in the embodiments of the present application.

The battery mentioned in the embodiments of the present application refers to a single physical module including one or a plurality of battery cells to provide a higher voltage and capacity. For example, the battery mentioned in the present application may include a battery module, a battery pack, or the like. The battery generally includes a box body for encapsulating one or a plurality of battery cells. The box body can prevent liquids or other foreign matters from affecting the charging or discharging of the battery cells.

The battery cell includes an electrode assembly and an electrolyte solution, the electrode assembly being composed of a positive electrode sheet, a negative electrode sheet, and a separator. The battery cell works mainly relying on the movement of metal ions between the positive electrode sheet and the negative electrode sheet. The positive electrode sheet includes a positive electrode current collector and a positive electrode active material layer. A surface of the positive electrode current collector is coated with the positive electrode active material layer. Current collectors not coated with the positive electrode active material layer protrude from the current collector coated with the positive electrode active material layer. The current collectors not coated with the positive electrode active material layer are stacked and serve as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode sheet includes a negative electrode current collector and a negative electrode active material layer. A surface of the negative electrode current collector is coated with the negative electrode active material layer. Current collectors not coated with the negative electrode active material layer protrude from the current collector coated with the negative electrode active material layer. The current collectors not coated with the negative electrode active material layer are stacked and serve as a negative tab. The material of the negative electrode current collector may be copper, and the negative electrode active material may be carbon, silicon, or the like. The material of the diaphragm may be PP, PE, or the like. In addition, the electrode assembly may be of a wound structure or a stacked structure, which is not limited in the embodiments of the present application.

Many design factors, such as energy density, cycle life, discharge capacity, charge-discharge rate and other performance parameters, should be considered in the development of the battery technology. In addition, the safety of the battery also needs to be considered.

A pressure relief mechanism on the battery cell has an important impact on the safety of the battery. For example, when a short circuit, overcharge, or the like occurs, it may cause thermal runaway inside the battery cell, resulting in a sudden rise in pressure or temperature. In this case, internal pressure and temperature can be relieved outward through the actuation of the pressure relief mechanism to prevent explosion and fire of the battery cell.

The emissions from the battery cell mentioned in the present application include, but are not limited to, the electrolyte solution, dissolved or split positive and negative electrode sheets, fragments of the separator, high temperature and high pressure gas generated by reaction, flames, and the like.

The inventor has analyzed and studied the structure of the heating film and the use environment after finding that the heating film cannot normally provide heat energy for battery cells during the working process of the battery. The inventor found that the heating film is usually attached to an outer surface of the battery cell or an inner surface of a box body. In an assembling and using process of the battery, the battery will be subjected to a large impact or vibration load, which will cause a heating layer in the heating film being bruised and punctured. The heating layer in the heating film is usually designed in one piece. When a location of a certain point is damaged, it will gradually affect a surrounding heating area due to heating and aging during use, and eventually cause the entire heating film and even the entire battery pack to fail.

Based on the above problems found by the applicant, the applicant has improved the structure of the heating film. The technical solutions described in the embodiments of the present application are applicable to a heating film, a battery including the heating film, and an electrical apparatus using the battery.

The electrical apparatus may be, but not limited to, a vehicle, a mobile phone, a portable device, a laptop computer, a ship, a spacecraft, an electric toy, an electric tool, and the like. the vehicle 1 may be a fuel vehicle, a gas vehicle or a new energy vehicle. The new energy vehicle may be an all-electric vehicle, a hybrid vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The embodiments of the present application do not impose special limitations on the above electrical device.

In the following embodiments, for the convenience of description, the electrical apparatus being a vehicle 1 is taken as an example for description.

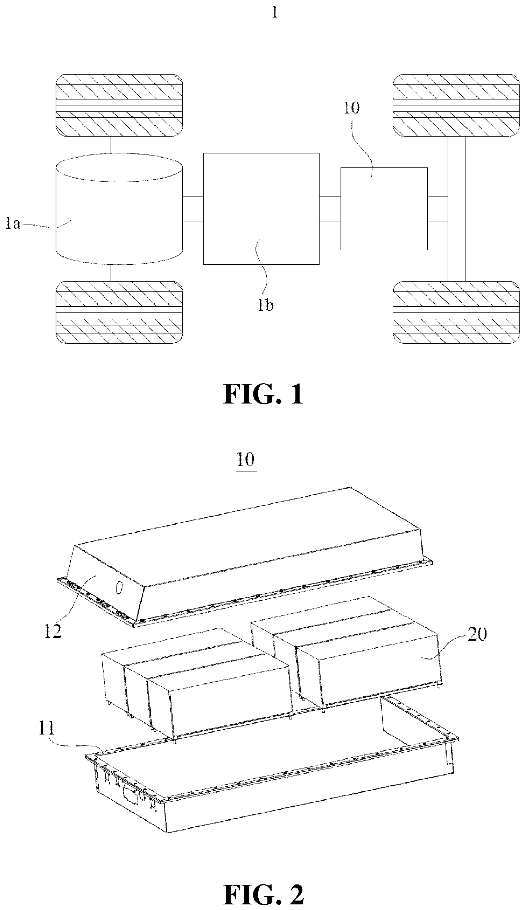

As shown in FIG. 1, a battery 10 is arranged inside the vehicle 1. The battery 10 may be arranged at the bottom or head or tail of the vehicle 1. The battery 10 may be configured to power the vehicle 1. For example, the battery 10 may be used as an operating power source of the vehicle 1.

The vehicle 1 may also include a controller 1b and a motor 1a. The controller 1b is configured to control the battery 10 to supply power to the motor 1a, for example, configured for operation power requirements of the vehicle 11 for starting, navigating and driving.

In some embodiments of the present application, the battery 10 may not only be used as the operating power source of the vehicle 1, but also be used as a driving power source of the vehicle 1 to replace or partially replace fuel or natural gas to provide driving power for the vehicle 1.

As shown in Fig. 2, the battery 10 includes a battery cell 30 (not shown in Fig. 2). The battery 10 may further include a box body for accommodating the battery cell 30.

The box body is used for accommodating the battery cell 30, and the box body may be in various structural forms.

In some embodiments, the box body may include a bottom case 11 and a top case 12. The bottom case 11 and the top case 12 cover each other. The bottom case 11 and the top case 12 together define an accommodating space for accommodating the battery cell 30. The bottom case 11 and the top case 12 may both have a hollow structure with one side open. An open side of the bottom case 11 covers an open side of the top case 12 to form the box body with an accommodating space. A sealing member may also be arranged between the bottom case 11 and the top case 12 to achieve a sealed connection between the bottom case 11 and the top case 12.

In practice, the bottom case 11 may cover the top of the top case 12. The bottom case 11 may also be referred to as an upper box body, and the top case 12 may also be referred to as a lower box body.

The bottom case 11 and the top case 12 may have various shapes, for example, a cylinder, a cuboid, and the like. In Fig. 2, by way of example, the bottom case 11 and the top case 12 are both of a cuboid structure.

In the battery 10, there may be one or a plurality of battery cells 30. If there are a plurality of battery cells 30, the plurality of battery cells 30 may be in series connection, parallel connection, or parallel-series connection. The "parallel-series connection" means that the plurality of battery cells 30 are connected both in series and in parallel. The plurality of battery cells 30 may be directly in series connection, parallel connection, or parallel-series connection, and then an entirety composed of the plurality of battery cells 30 may be accommodated in the box body, or the plurality of battery cells 30 may be in series connection, parallel connection, or parallel-series connection first to form a battery module 20. A plurality of battery modules 20 are then in series connection, parallel connection, or parallel-series connection to form an entirety, and are accommodated in the box body.

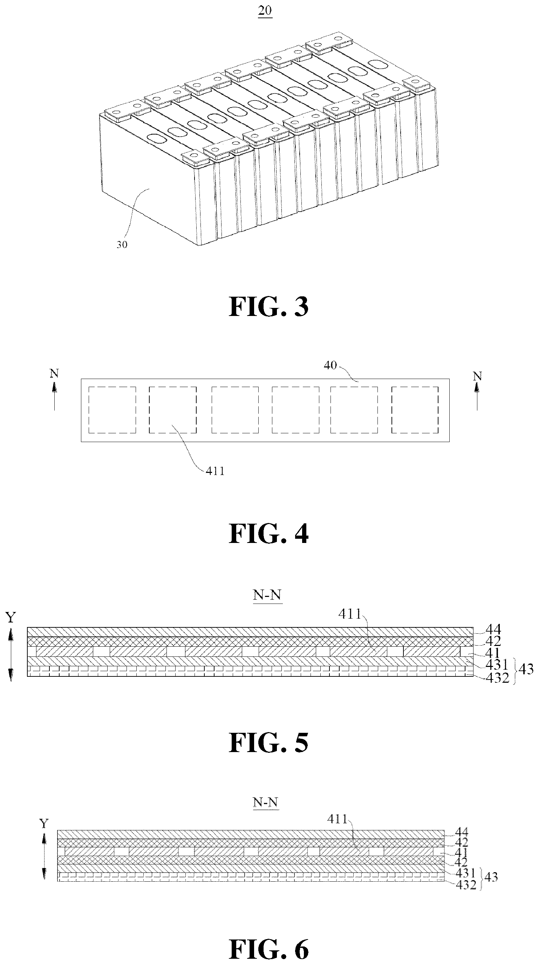

In some embodiments, as shown in Fig. 3, in the battery 10, there are a plurality of battery cells 30. A plurality of battery cells 30 are first in series connection, parallel connection, or parallel-series connection to form a battery module 20. A plurality of battery modules 20 are then in series connection, parallel connection, or parallel-series connection to form an entirety, and are accommodated in the box body.

In some embodiments, the plurality of battery cells 30 in the battery module 20 may be electrically connected through a convergence component, so as to realize parallel connection, series connection, or parallel-series connection of the plurality of battery cells 30 in the battery module 20.

In some embodiments, the battery 10 includes a heating film 40, and the heating film 40 is used for heating the plurality of battery cells 30 so that the plurality of battery cells 30 is still capable of being used normally when the ambient temperature is low. The heating film 40 may be arranged on a surface of the battery cell 30, and in some application scenarios, the heating film 40 may also be arranged on an inner surface of the box body.

According to the heating film 40 provided in the embodiments of the application, as shown in Fig. 4 to FIG. 6, the heating film 40 includes a first protective layer 43, a second protective layer 44, and a heating layer 41 and an electrode layer 42 stacked between the first protective layer 43 and the second protective layer 44. The heating layer 41 includes a plurality of sub heating regions 411 arranged at intervals. The electrode layer 42 is electrically connected to the plurality of sub heating regions 411 to form a parallel heating loop.

Specifically, the sub heating region 411 is capable of generating heat when it is energized. The electrode layer 42 is internally arranged with a circuit, and two opposite sides of a surface perpendicular to the stacking direction Y of each sub heating region 411 are connected to corresponding circuits to form a loop with each sub heating region 411 and the corresponding circuit. The plurality of sub heating regions 411 form a plurality of loops on the heating layer 41, so that when the electrode layer 42 is energized, a current will flow through each sub heating region 411, and each sub heating region 411 can work independently to generate heat; therefore, the whole heating layer 41 generates heat. The first protective layer 43 and the second protective layer 44 are used for insulating the electrode layer 42 and the heating layer 41 from an outside world to prevent electric leakage and ensure the normal operation of the heating film 40.

It is understandable that structures and materials of the first protective layer 43 and the second protective layer 44 may be the same or different, as long as they are capable of insulating the heating layer 41 and the electrode layer 42 sandwiched therein from the outside world.

For the heating film 40 provided by the embodiments of the present application, by arranging the heating layer 41 including a plurality of sub heating regions 411, and arranging the sub heating regions 411 to form a parallel heating loop with the electrode layer 42, each sub heating region 411 forms an independent circuit, so that when a single sub heating region 411 is aged due to being punctured or damaged, it will only affect heating at the corresponding location of the sub heating region 411, and will not affect normal heating of a location of the heating film 40 corresponding to other sub heating regions 411, thereby ensuring the normal operation of other sub heating regions 411 of the heating film 40. Such arrangement is conducive to improving the service life of the heating film 40 and reducing the possibility of heating failure of the heating film 40.

In order to ensure that the heat generated by the heating film 40 is transferred to the battery cell 30 quickly and efficiently, the heating film 40 may be bonded to the outer surface of the battery cell 30 or the inner surface of the box body. The heating film 40 may also be sandwiched between the box body and the battery cell 30 by applying a certain pressure. As long as the good contact between the heating film 40 and the battery cell 30 is ensured, a good thermal conduction process between the heating film 40 and the battery cell 30 can be ensured.

In the embodiment where the heating film 40 is bonded to the outer surface of the battery cell 30 or the inner surface of the box body by means of bonding, a structure with a bonding function may be integrated on the heating film 40 or may not be integrated on the heating film 40.

In some embodiments, at least one of the first protective layer 43 and the second protective layer 44 includes an insulating sub-layer 431 and a bonding sub-layer 432, the bonding sub-layer 432 is arranged on one side of the insulating sub-layer 431 away from the heating layer 41. That is, the bonding sub-layer 432 is arranged on the outermost surface layer of the heating film 40 to bond the heating film 40 to the outer surface of the battery cell 30 or the inner surface of the box body.

At least one of the first protective layer 43 and the second protective layer 44 includes the bonding sub-layer 432, that is, by arranging the bonding sub-layer 432 with a bonding function to be integrated on the heating film 40, the heating film 40 can be adhered to a corresponding location more conveniently and quickly.

The specific material of the heating layer 41 is not limited, as long as it is capable of generating heat when energized. In some embodiments, the sub heating region 411 includes metal wires such as copper wires, and the metal wires such as copper wires is capable of quickly generating heat when energized and have good heating performance.

In other embodiments, the material of the sub heating region 411 includes graphene. The material of the sub heating region 411 may be graphene in whole or may be graphene in part, which is not limited here.

Graphene has a flexible structure and is not easy to be scratched. Even after being scratched, it is not easy to cause short circuit or even fire of the heating layer 41. In addition, graphene has a high thermal conductivity and a good heat generation effect, and is capable of generating heat quickly when it is energized. Therefore, the heating film 40 made of the graphene material has good thermal conductivity and safety performance.

The first protective layer 43 and the second protective layer 44 are made of insulating materials. The specific materials used are not limited, as long as it is capable of ensuring that the heating layer 41 and the electrode layer 42 of the heating film 40 are insulated from the outside world to ensure the normal operation of the heating film 40.

In some embodiments, the material of the first protective layer 43 includes at least one of polyimide and polyethylene. Specifically, the material of the first protective layer 43 may only include polyimide or may only include polyethylene, or may include both polyimide and polyethylene. Of course, the material of the first protective layer 43 may include another material besides at least one of the above two materials.

It is understandable that both polyimide and polyethylene have a high heat resistance temperature and a high melting temperature, which can ensure the structural stability of the first protective layer 43 of the heating film 40 in a working state, and is conducive to improving the working safety of the battery 10. In addition, polyimide and polyethylene have a high tensile strength, which facilitates formation of the first protective layer 43 and enables the first protective layer 43 to have a high tensile strength.

In some embodiments, the material of the second protective layer 44 includes at least one of polyimide and polyethylene. This embodiment has the same technical effect as the technical solution in which the material of the first protective layer 43 in the above embodiment includes at least one of polyimide and polyethylene, which will not be repeated here.

The heating film 40 may be arranged with one heating layer 41 or a plurality of heating layers 41, which is not limited here. It is understandable that in an embodiment where a plurality of heating layers 41 are arranged in the heating layer 41, the heating film 40 has a higher heat generation efficiency.

No matter one heating layer 41 or a plurality of heating layers 41 are arranged in the heating film 40, the heating layer 41 of the same layer includes a plurality of sub heating regions 411 arranged at intervals, and each sub heating region 411 can generate heat independently. The interval between the adjacent sub heating regions 411 of the same layer is not limited, as long as it is capable of ensuring that the heating film 40 is capable of generating heat normally, and the adjacent sub heating regions 411 will not generate electrical connection.

In some embodiments, a gap between two adjacent sub heating regions 411 of the same layer is 3 mm to 8 mm. For example, the gap between the two adjacent sub heating regions 411 of the same layer may be 3 mm, 4 mm, 5 mm, 6 mm, 7 mm, or 8 mm. The gaps between different adjacent sub heating regions 411 may be the same or different.

Arranging the gap between the two adj acent sub heating regions 411 of the same layer may prevent the gap between the sub heating regions 411 from being too large or too small, thereby reducing the risk of a low heating efficiency of the heating film 40 caused by an excessively large gap between the sub heating regions 411, and at the same time, reducing the risk of increased processing difficulties caused by too small gap between the sub heating regions 411, as well as the risk of short circuit between circuit loops formed by different sub heating regions 411. Therefore, while ensuring the thermal efficiency of the heating film 40 of a certain area, it is also convenient for the processing of the heating film 40, and improves the safety of the heating film 40 during use.

The electrode layer 42 may be arranged on one side of the heating layer 41, or the electrode layers 42 may be arranged on both sides of the heating layer 41, as long as each sub heating region 411 is capable of being caused to form a circuit loop that is capable of generating heat.

In some embodiments, as shown in Fig. 6, one heating layer 41 is provided with two electrode layers 42, and the two electrode layers 42 are respectively arranged on surfaces on both sides of the heating layer 41.

Specifically, electrode layers 42 are formed on the surfaces of both sides of each sub heating region 411 in the stacking direction Y, and the electrode layers 42 on both sides are capable of forming a circuit loop with the sub heating region 411. In this way, when any of the two electrode layers 42 corresponding to the sub heating region 411 cannot form a circuit loop with a corresponding sub heating region 411 due to damage, the other one of the two electrode layers 42 is still capable of forming a circuit loop with the sub heating region 411 and providing electric energy for the sub heating region 411, and the heating film 40 is still capable of working normally.

Therefore, arranging one heating layer 41 for two electrode layers 42 can effectively reduce the risk of heating failure of the heating film 40 due to the damage of the electrode layer 42.

The sub heating regions 411 may be distributed in the heating layer 41 in a rectangular array, or in a ring or circular array, or in any other arbitrary shape, as long as the overall heat generation performance of the heating film 40 is capable of be ensured.

In some embodiments, the sub heating regions 411 are distributed in one row or a plurality of rows, and each row is provided with a plurality of the sub heating regions 411 distributed at intervals.

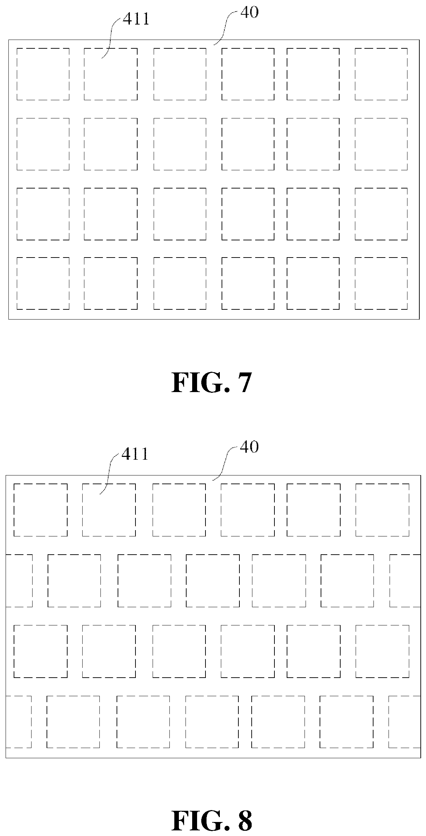

As shown in Fig. 7 and Fig. 8, in the embodiment where the sub heating regions 411 are distributed in a plurality of rows, the sub heating regions 411 in two adjacent rows may be arranged in an aligned manner or arranged in a staggered manner in a direction perpendicular to the row direction in the distribution plane. Arranging the sub heating regions 411 in two adjacent rows in a staggered manner is beneficial to improving the uniformity of the heating location of the heating film 40.

It is understandable that, on the premise that the area of the heating film 40 is fixed, arranging the sub heating regions 411 to be distributed in one row or a plurality of rows is convenient for the layout of the sub heating regions 411 of the heating layer 41, thereby being conducive to the circuit layout in the electrode layer 42. By arranging the sub heating regions 411 to be distributed in a plurality of rows, on the premise that the area of the heating film 40 is fixed, the quantity of heating locations of the heating film 40 may be further increased, and a heating area of a single sub heating region 411 may be reduced, so that consequences of heating failure caused by the damage of the sub heating region 411 have less impact on the heating effect of the entire heating film 40.

Depending on different arrangement manners of the internal circuit of the electrode layer 42, the electrode layer 42 may form a circuit with each sub heating region 411 in various forms, which is not limited here, as long as it is capable of forming a loop with the sub heating region 411 and generating a current.

In some embodiments, the electrode layer 42 includes electrodes 421 and wires. Two wires are connected on both sides of each sub heating region 411 that are arranged opposite to each other. One wire is connected to one electrode 421, and the other wire is connected to the other electrode 421. A voltage is applied to the two electrodes 421 so that the two electrodes 421 generate a potential difference. Then, the sub heating region 411 and the two wires connected thereto form a current, and the sub heating region 411 generates heat.

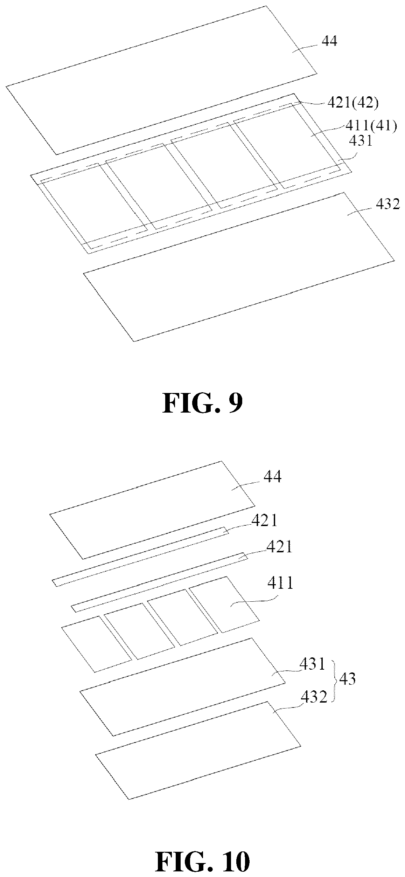

In some other embodiments, as shown in Fig. 9 to Fig. 11, the electrode layer 42 includes a plurality of electrodes 421, and the electrodes 421 are respectively attached on two opposite sides of a surface perpendicular to the stacking direction Y of the sub heating region 411.

Specifically, the electrodes 421 may be attached on two opposite sides of the surface of each sub heating region 411 perpendicular to the stacking direction Y In the embodiment where the sub heating regions 411 are distributed in one row or a plurality of rows, all or part of the sub heating regions 411 in each row share the same piece of electrode 421. The above arrangement manners can achieve the purpose of generating heat in the sub heating region 411.

The arranged electrode layer 42 includes a plurality of electrodes 421. The electrodes 421 generate a potential difference on the opposite sides of the sub heating region 411, thereby enabling the sub heating region 411 to generate heat, which can simplify the circuit layout inside the electrode layer 42.

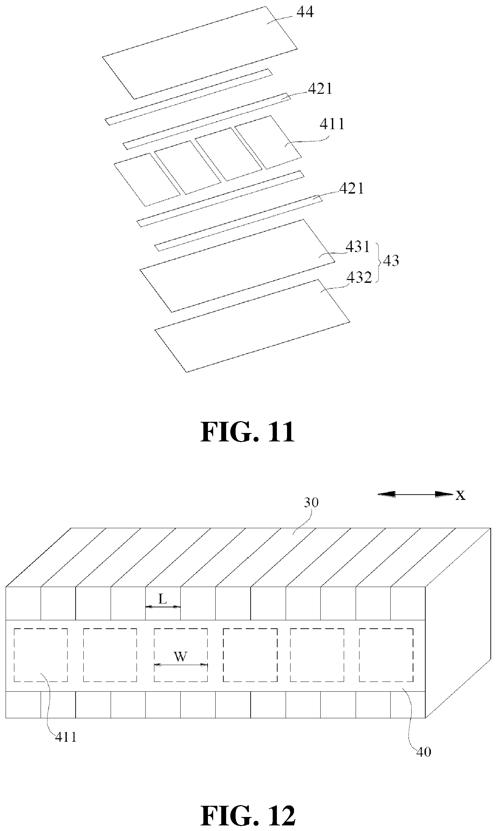

It is understandable that, as shown in Fig. 11, in the embodiment where the electrode layer 42 is arranged on both sides of each heating layer 41 in the stacking direction Y, by arranging the arranged electrode layer 42 including a plurality of electrodes 421, both sides of each sub heating region 411 are sandwiched between two electrodes 421. In this way, when any one of the two the electrodes 421 corresponding to each sub heating region 411 is not capable of transmitting electric energy due to scratch, damage, or the like, the other one is still capable of continuously providing electric energy for the corresponding sub heating region 411, which can reduce the risk of the heating failure of the sub heating region 411.

In some embodiments, one electrode 421 is electrically connected to a plurality of sub heating regions 411 in the same row in the row direction of the plurality of sub heating regions 411.

Specifically, a piece of electrode 421 is attached to each row of the sub heating region 411 respectively along two sides perpendicular to the row direction, and when a voltage is applied to two pieces of electrodes 421 to generate a potential difference between the two, a current will flow through the sub heating region 411. In this way, the two electrodes 421 form a parallel loop with the plurality of sub heating regions 411 in the same row. When one sub heating region 411 is broken, other sub heating regions 411 is still capable of working normally.

A plurality of sub heating regions 411 are arranged in one row or a plurality of rows. One electrode 421 is electrically connected to the plurality of sub heating regions 411 in the same row at the same time. One electrode 421 may be electrically connected to parts of the plurality of sub heating regions 411 in the same row, or may be electrically connected to all sub heating regions 411 in the same row. The damage of one sub heating region 411 does not affect the normal operation of other heating regions, and the arrangement of the electrodes 421 inside the electrode layer 42 may be simplified.

It is understandable that, in the embodiment where the plurality of sub heating regions 411 of the heating layer 41 are distributed in a plurality of rows, the sub heating regions 411 in two adjacent rows may be respectively arranged with corresponding electrodes 421, or the sub heating regions 411 in two adjacent rows may share one electrode 421, which is not limited here.

In some embodiments, one electrode 421 is electrically connected to the sub heating regions in two adjacent rows.

That is, arranging the sub heating regions 411 in two adjacent rows sharing the same electrode 421 may mean parts of the sub heating regions 411 in two adjacent rows share one electrode 421, or may mean all of the sub heating regions 411 in two adjacent rows share one electrode 421. In this way, the quantity of the electrodes 421 in the electrode layer 42 may be further effectively reduced, thereby further simplifying the layout of the electrodes 421 in the electrode layer 42.

It should be noted that in order to generate a potential difference between the two electrodes 421 corresponding to two opposite sides of the sub heating region 411, the two electrodes 421 may be connected to positive potentials, and the potentials of the two are not equal, or the two electrode sheets may be connected to negative potentials, and the potentials of the two are not the same, or one electrode sheet may be connected to a positive potential and the other may be connected to a negative potential. The above three conditions may generate a potential difference on two opposite sides of the sub heating region 411, and then generate a current in the sub heating region 411 to achieve the purpose of generating heat in the sub heating region 411.

For the battery 10 according to the embodiments of the present application, as shown in Fig. 12, the battery 10 includes the heating film 40 provided in any of the above embodiments and battery cells 30. The plurality of battery cells 30 are stacked in the thickness direction X, and the heating film 40 is used for heating the battery cells 30. Specifically, the heating film 40 may be attached to a surface of the battery cell 30 or an inner surface of a box body, which may be selected according to actual needs.

When the battery 10 operates in an extremely cold environment, the electrode layer 42 of the heating film 40 is energized, and a circuit loop is formed in each sub heating region 411. Then, there is current flowing through the sub heating region 411, and the sub heating region 411 generates heat. Opening of the circuit loop of one sub heating region 411 in the heating layer 41 does not affect the normal operation of the circuit loops of other sub heating regions 411, and therefore, opening of the circuit loop of a corresponding sub heating region 411 caused by a damage of one sub heating region 411 can only affect the normal heating of the corresponding sub heating region 411, and has no effect on the normal heating of other sub heating regions 411. Therefore, the normal heating of the heating film 40 on the battery cell 30 will not be affected.

Therefore, the battery 10 provided in the embodiment of the present application has the same technical effect due to the use of the heating film 40 provided in any of the above embodiments, which will not be repeated here.

In some embodiments, the heating film 40 is attached to an outer surface of the battery cell 30.

Specifically, the heating film 40 may be attached to one or a plurality of a top surface, a bottom surface, and two side surfaces of the battery cell 30. Arranging the heating film 40 to be attached to the outer surface of the battery cell 30 causes the heating film 40 to be in direct contact with the battery cell 30, which is more convenient for the heat generated by the heating film 40 to be transferred to the battery cell 30, and improves the heat transfer efficiency of both.

The heating film 40 includes a plurality of sub heating regions 411 distributed at intervals. The size of the single sub heating region 411 is not limited, as long as the heating function is capable of being realized.

In some embodiments, the size of the sub heating region 411 in the thickness direction X is W, the size of the battery cell 30 in the thickness direction X is L, and L≤W≤2L. That is, it is arranged that the size of the sub heating region 411 in the thickness direction X is greater than or equal to the thickness size of one battery cell 30 and less than or equal to the thickness size of two battery cells 30. Through the above arrangement, the heating layer 41 may be arranged with a reasonable quantity of sub heating regions 411, which can reduce the risk of low heat transfer efficiency of the heating film 40 caused by too few partitions of the heating layer 41 of the heating film 40, and further reduce the risk of increased manufacturing difficulty of the heating film 40 caused by too many partitions of the heating layer 41.

An electrical apparatus provided according to the embodiments of the present application includes the battery 10 provided in any of the above embodiments, and the battery 10 is used for providing electric energy.

The electrical apparatus provided according to the embodiments of the present application has the same technical effect due to the use of the battery 10 provided in any of the above embodiments, which will not be repeated here.

Although the present application has been described with reference to the preferred embodiments, various improvements can be made thereto and components thereof can be replaced with equivalents without departing from the scope of the present application. In particular, as long as there is no structural conflict, the technical features mentioned in various embodiments may be combined in any way. The present application is not limited to the specific embodiments disclosed herein, but rather includes all technical solutions falling within the scope of the claims.

Through the above arrangement, the heating layer 41 may be arranged with a reasonable quantity of sub heating regions 411, which can reduce the risk of low heat transfer efficiency of the heating film 40 caused by too few partitions of the heating layer 41 of the heating film 40, and further reduce the risk of increased manufacturing difficulty of the heating film 40 caused by too many partitions of the heating layer 41.

An electrical apparatus provided according to the embodiments of the present application includes the battery 10 provided in any of the above embodiments, and the battery 10 is used for providing electric energy.

The electrical apparatus provided according to the embodiments of the present application has the same technical effect due to the use of the battery 10 provided in any of the above embodiments, which will not be repeated here.

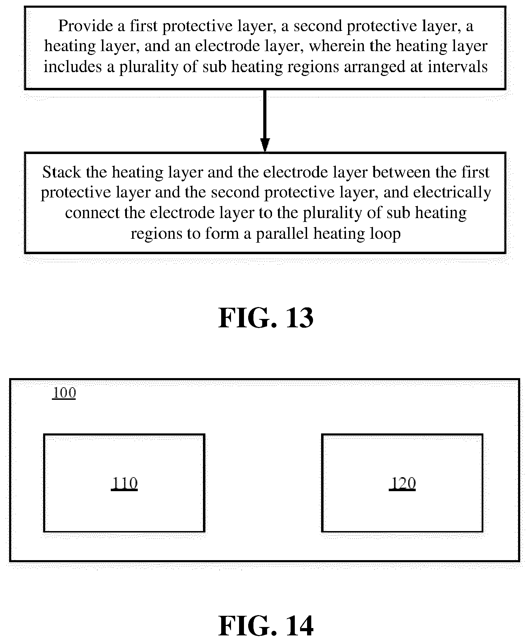

As shown in Fig. 13, a manufacturing method of a heating film according to an embodiment of the present application includes:
providing a first protective layer 43, a second protective layer 44, a heating layer 41, and an electrode layer 42, where the heating layer 41 includes a plurality of sub heating regions 411 arranged at intervals; and
arranging the heating layer 41 and the electrode layer 42 in a stacked manner between the first protective layer 43 and the second protective layer 44, and electrically connecting the electrode layer 42 to the plurality of sub heating regions 411 to form a parallel heating loop.

As shown in Fig. 14, a manufacturing device of a heating film according to an embodiment of the present application includes a provision module 110 and an assembling module 120. The provision module 110 is configured to provide a first protective layer 43, a second protective layer 44, a heating layer 41, and an electrode layer 42, where the heating layer 41 includes a plurality of sub heating regions 411 arranged at intervals. The assembling module 120 is configured to arrange the heating layer 41 and the electrode layer 42 in a stacked manner between the first protective layer 43 and the second protective layer 44, and electrically connect the electrode layer 42 to the plurality of sub heating regions 411 to form a parallel heating loop.

The manufacturing method and manufacturing device of the heating film provided by the embodiments of the present application have the same technical effect because they are capable of manufacturing the heating film 40 provided by any of the above embodiments, which will not be repeated here.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A heating film, the heating film comprising a first protective layer, a second protective layer, and a heating layer and an electrode layer arranged in a stacked manner between the first protective layer and the second protective layer, the heating layer comprising a plurality of sub heating regions arranged at intervals, and the electrode layer being electrically connected to the plurality of sub heating regions to form a parallel heating loop.

2. The heating film according to claim 1, wherein at least one of the first protective layer and the second protective layer comprises an insulating sub-layer and a bonding sub-layer, and the bonding sub-layer is arranged on one side of the insulating sub-layer away from the heating layer.

3. The heating film according to claim 1 or 2, wherein a material of the sub heating region comprises graphene; and/or,
a material of the first protective layer comprises at least one of polyimide and polyethylene; and or,
a material of the second protective layer comprises at least one of polyimide and polyethylene.

4. The heating film according to any one of claims 1 to 3, wherein a gap between the two adjacent sub heating regions of the same layer is 3 mm to 8 mm.

5. The heating film according to any one of claims 1 to 4, wherein one heating layer is provided with two electrode layers, and the two electrode layers are respectively arranged on surfaces on both sides of the heating layer.

6. The heating film according to any one of claims 1 to 5, wherein the sub heating regions are distributed in one or a plurality of rows, and each row has a plurality of sub heating regions distributed at intervals.

7. The heating film according to claim 6, wherein the electrode layer comprises a plurality of electrodes, and two opposite sides of a surface perpendicular to a stacking direction of the sub heating region (411) are respectively electrically connected to electrodes.

8. The heating film according to claim 7, wherein one electrode is electrically connected to a plurality of sub heating regions in the same row in a row direction of the plurality of sub heating regions; and/or, one electrode is electrically connected to the sub heating regions of two adjacent rows.

9. A battery, comprising:
The heating film according to any one of claims 1 to 8; and
A battery cell, a plurality of the battery cell being arranged to be stacked in a thickness direction, and the heating film being used for heating the battery cell.

10. The battery according to claim 9, wherein the heating film is attached to an outer surface of the battery cell; and/or,
a dimension of the sub heating region in the thickness direction is W, a dimension of the battery cell in the thickness direction is L, and L≤W≤2L.

11. An electrical apparatus, comprising the battery according to claim 9 or 10, wherein the battery is configured to provide electric energy.

12. A manufacturing method of a heating film, comprising:
providing a first protective layer, a second protective layer, a heating layer, and an electrode layer, wherein the heating layer comprises a plurality of sub heating regions arranged at intervals; and
stacking the heating layer and the electrode layer between the first protective layer and the second protective layer, and electrically connecting the electrode layer to the plurality of sub heating regions to form a parallel heating loop.

13. A manufacturing device of a heating film, comprising:
a provision module configured to provide a first protective layer, a second protective layer, a heating layer, and an electrode layer, wherein the heating layer comprises a plurality of sub heating regions arranged at intervals; and
an assembling module configured to stack the heating layer and the electrode layer between the first protective layer and the second protective layer, and electrically connect the electrode layer to the plurality of sub heating regions to form a parallel heating loop.
